## Europäisches Patentamt

## European Patent Office

## Office européen des brevets

(19)

(11) Veröffentlichungsnummer: **0 149 137
B1**

(12)

# EUROPÄISCHE PATENTSCHRIFT

(45) Veröffentlichungstag der Patentschrift:
28.10.87

(51) Int. Cl.⁴: **B 60 T 8/18**

(21) Anmeldenummer: **84115256.4**

(22) Anmeldetag: **12.12.84**

(54) **Bremskraftregelanlage.**

(30) Priorität: **20.12.83  DE 3345913**

(43) Veröffentlichungstag der Anmeldung:
**24.07.85 Patentblatt 85/30**

(45) Bekanntmachung des Hinweises auf die Patenterteilung:
**28.10.87 Patentblatt 87/44**

(84) Benannte Vertragsstaaten:
**DE FR GB SE**

(56) Entgegenhaltungen:
**WO - A - 83/03230**

(73) Patentinhaber: **ROBERT BOSCH GMBH, Postfach 50,
D-7000 Stuttgart 1 (DE)**

(72) Erfinder: **Stumpe, Werner, Dipl.-Ing.,
Goerdelerstrasse 10, D-7014 Kornwestheim (DE)**

(74) Vertreter: **Kammer, Arno, Dipl.-Ing., ROBERT BOSCH
GmbH Zentralabteilung Patente Postfach 50,
D-7000 Stuttgart 1 (DE)**

ACTORUM AG

## Beschreibung

Die Erfindung betrifft eine Bremskraftregelanlage nach den Merkmalen des Oberbegriffs des Anspruchs 1.

Eine Bremskraftregelanlage mit diesen Merkmalen ist aus der PCT-Veröffentlichung WO-A-83/03230 bekannt. Dort werden die Achslasten getrennt ermittelt und hieraus wird eine Bremskraftverteilung abgeleitet.

Der Erfindung liegt die Aufgabe zugrunde eine Bremskraftregelanlage zu schaffen, die mit geringem Sensoraufwand auskommt und beim Bremsen fortlaufend die Bremskraftverteilung an die augenblicklichen Gegebenheiten anpasst.

Diese Aufgabe wird durch die im Anspruch 1 angegebenen Merkmale gelöst.

Das Wesen der Erfindung wird darin gesehen, dass nur ein Achslastsensor verwendet wird, aus dessen Signalen der statische und dynamische Achslastanteil ermittelt wird, wobei mit dem zum (oder vor) Bremsbeginn ermittelten und gespeicherten statischen Anteil der gemessenen Achse eine Grundbremskraft für die Bremsen beider Achsen eingesteuert wird, die dann durch vorzeichenrichtige Überlagerung des sich ändernden dynamischen Anteils variiert wird. Die Einsteuerung der Grundbremskraft ist an der gemessenen Achse, vorzugsweise der Hinterachse, abhängig insbesondere proportional der gemessenen Last, während für die andere Achse aus dem Messwert an der gemessenen Achse auf den etwaigen Lastwert an der anderen Achse geschlossen wird. Dies kann durch Interpolation geschehen, wenn einerseits die Last dieser Achse unbeladen und bei voller Beladung bekannt ist. Es ist jedoch auch möglich, den Lastmesswerten an der gemessenen Achse daraus resultierende Lastwerte der andern Achse zuzuordnen. Dies gilt insbesondere bei Nutzfahrzeugen und Messung an der Hinterachse.

Die Erfindung ist nicht auf die Anwendung bei Zweiachsfahrzeugen beschränkt. Sie ist auch dann anwendbar, wenn zusätzlich noch der Bremsdruck nach anderen Kriterien z. B. durch eine ABS-Anlage geregelt wird. Auch ist es gleichgültig, ob durch die vom Fahrer vorgegebene Sollgrösse ein entsprechender Bremsdruck eingesteuert oder eingeregelt wird, oder ob mit der Vorgabe der Sollgrösse eine entsprechende Fahrzeugverzögerung oder ein Radschlupf wenigstens eines Fahrzeugrads eingeregelt wird (wie bei der eingangs erwähnten PCT-Veröffentlichung).

Weitere Ausbildungen und Vorteile der Erfindung ergeben sich anhand der im folgenden beschriebenen Ausführungsbeispiele:

Es zeigen

Fig. 1 eine Skizze zur Erklärung der Grundlagen der Erfindung,

Fig. 2 einen ersten Bremsregler mit Druckeinsteuerung,

Fig. 3 einen Bremsregler mit Druckeinregelung,

Fig. 4 einen weiter verbesserten Bremsregler.

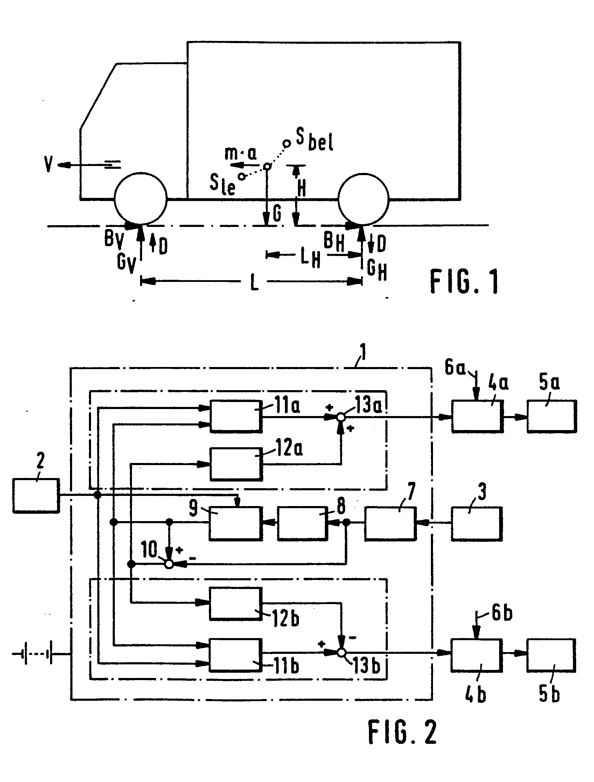

Fig. 1 zeigt ein Nutzfahrzeug in schematischer Darstellung, das ein augenblickliches Gesamtgewicht G hat, das an dem augenblicklichen Schwerpunkt S angreift. Es sind noch die Schwerpunkte bei leerem Fahrzeug $S_{le}$ und voll beladenem Fahrzeug $S_{bel}$ angedeutet. Alle drei Schwerpunkte liegen auf einer gepunktet gezeichneten Kurve des Schwerpunktsverlaufs. Bei dem gegebenen Gewicht G ist der statische Lastanteil an der Hinterachse $G_H$ und der an der Vorderachse $G_V$. Die an den Rädern angreifenden Bremskräfte sind mit $B_V$ und $B_H$ bezeichnet, der beim Bremsen auftretende dynamische Lastanteil mit D, wobei im Bild eine Bremsung bei Vorwärtsfahrt unterstellt ist. Bei Rückwärtsfahrt ergeben sich entgegengesetzte dynamische Lastanteile D. Die Kraftschlussbeanspruchungen $f_{VA}$ und $f_{HA}$ bei der Achse sind wie folgt gegeben:

$$f_{VA} = \frac{B_V}{G_V + D} \qquad (1)$$

$$f_{HA} = \frac{B_H}{G_H - D} \qquad (2)$$

Hierbei ist unterstellt, dass D bei Vorwärtsfahrt positiv ist und bei Rückwärtsfahrt negativ wird.

Will man gleiche Kraftschlussbeanspruchung an den beiden Achsen, so ergibt sich die Bremskraftverteilung zu:

$$\frac{B_V}{B_H} = \frac{G_V + D}{G_H - D} \qquad (3)$$

Hierbei ist D während der Bremsung eine variable Grösse. Zusätzlich gilt für die Fahrzeugverzögerung a:

$$a = g \frac{B_V}{G_V + G_H} + g \frac{B_H}{G_V + G_H} \qquad (4)$$

In Fig. 2 ist ein erstes Ausführungsbeispiel eines erfindungsgemässen Bremsreglers 1 gezeigt. Dort ist mit 2 ein Betätigungsorgan z. B. ein Bremspedal bezeichnet, das ein seiner Auslenkung durch den Fahrer entsprechendes Soll-Signal liefert. Mit 3 ist ein an der Hinterachse angebrachter Achslastsensor bekannter Bauart bezeichnet. Mit 5a ist die Vorderradbremse bezeichnet, mit 5b die Hinterradbremse. Mit vorgeschalteten Ventileinrichtungen 4a bzw. 4b werden bei deren Ansteuerung Bremsdrücke in den Bremsen 5a bzw. 5b eingesteuert, wobei durch die Pfeile 6a und 6b die Zuführung von unter Druck stehendem Druckmittel angedeutet ist.

Der Achslastsensor 3 liefert ein dem augenblicklichen Messwert entsprechendes Signal. Dieses wird über ein erstes Dämpfungsglied 7 geführt, das die durch Achsbewegungen erzeugten Schwankungen ausfiltert. Am Ausgang des Dämpfungsglieds 7 steht ein Signal zu Verfügung, das sich aus der statischen Achslast $G_H$ an der Hinterachse und dem beim Bremsen auftretenden dynamischen Anteil D zusammensetzt. In dem weiteren Dämpfungsglied 8 wird der dynamische Teil ausgefiltert, so dass einem nachgeschalteten Speicher 9 ein der statischen Achslast entsprechendes Signal zugeführt wird. Bei Betätigung des Bremspedals 2 wird dieses Signal eingespeichert. Das Ausgangssignal des Speichers wird Anpassungsgliedern 11a für die Vorderachse und 11b für die Hinterachse zugeführt. Diesen Anpassungsgliedern 11a und 11b wird auch das Sollsignal des Betätigungsorgans 2 zugeführt. Im Anpassungsglied 11b wird aus der Vorgabe des Fahrers (Sollsignal) und dem Lastsignal aus dem Speicher 9 ein erstes Bremsdrucksteuersignal für die Ventileinrichtung 4b ermittelt. Die gleichen Signale gelangen auch zum Anpassungsglied 11a; dort muss aus dem Lastsignal der Hinterachse aus dem Speicher 9 ein der Achslast $G_V$ an der Vorderachse entsprechendes Signal gewonnen werden, was durch Zuordnung über einen Funktionsgeber oder eine gespeicherte Tabelle oder durch Interpolation geschehen kann.

Der entsprechende Zusammenhang zwischen den Achslasten an der Vorderachse und den Messwerten an der Hinterachse kann vorher aufgenommen und abgespeichert sein; es ist jedoch auch möglich, nur die bei leerem und voll beladenem Fahrzeug gegebenen Vorderachslasten abzuspeichern und entsprechend der aus der Differenz der vom Lastsensor ermittelten Hinterachsbelastung und der Hinterachslast ohne Beladung gewonnenen Grösse zwischen den Extremwerten zu interpolieren. In einer Überlagerungsstufe 10 wird durch Bildung der Differenz des Eingangssignals des Dämpfungsgliedes 8 und dem Speicherwert des Speichers 9 eine dem dynamischen Anteil D der Achslasten entsprechendes Signal gebildet, aus dem in den Anpassungsgliedern 12a und 12b zweite Bremsdrucksteuersignale gewonnen werden. Diese werden Überlagerungsgliedern 13a und 13b zugeführt. Dort werden die von den Anpassungsgliedern 11a und 11b kommenden, den Bremsdruck aufgrund der Betätigung des Organs 2 und der Achslasten bestimmenden ersten Bremsdrucksteuersignale entsprechend den augenblicklichen dynamischen Achslastanteilen korrigiert. Im vorliegenden Fall der Fig. 2, in dem nur eine Einsteuerung eines Bremsdrucks erfolgt (ohne Rückmeldung) wird man im Überlagerungsglied die Grösse der Bremsdrucksteuersignale für die Ventileinrichtungen 4a und 4b entsprechend variieren zur proportionalen Aussteuerung eines Bremsdruckes zu den Bremsen 5a, 5b.

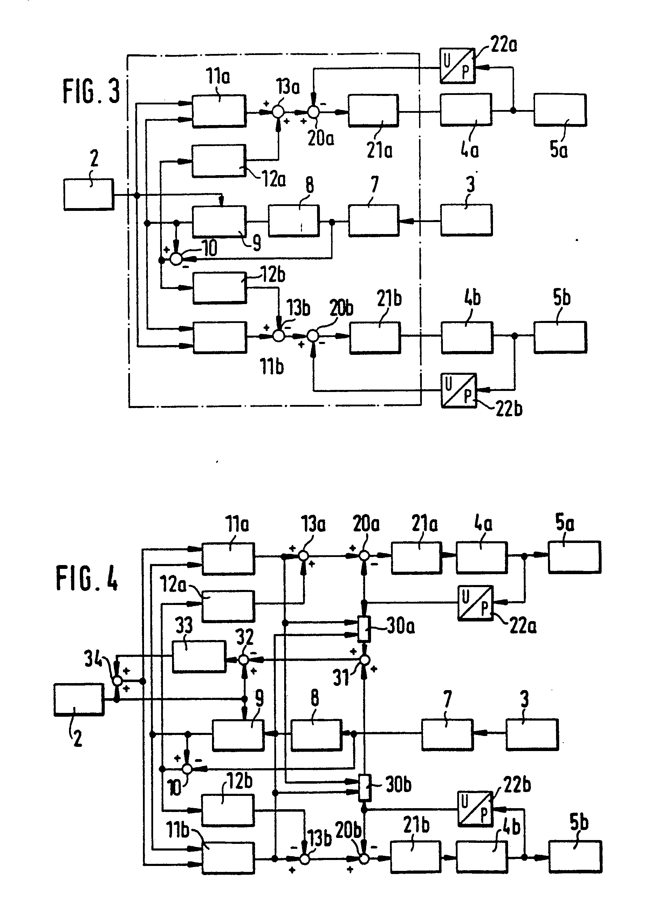

Das Ausführungsbeispiel der Fig. 3 unterscheidet sich von dem der Fig. 2 lediglich dadurch, dass in jeden Ansteuerkreis noch ein weiteres Überlagerungsglied 20a bzw. 20b, ein weiterer Regler 21a und 21b und ein Druck-Signalwandler 22a und 22b eingeschaltet ist. Hier wird der Druck an den Bremsen 5a und 5b gemessen und an die Überlagerungsglieder 20a und 20b rückgemeldet. In diesem Beispiel bestimmt die Grösse des Ausgangssignals der Überlagerungsglieder 13a und 13b den Bremsdruck. Der Regler 21a bzw. 21b steuert die Ventileinrichtung 4a bzw. 4b so, dass je ein diesem Überlagerungssignal entsprechender Bremsdruck eingesteuert wird.

In Fig. 4 ist der Bremsregler der Fig. 3 um zwei Rechenglieder 30a und 30b, drei Überlagerungsglieder 31, 32 und 34 sowie einen Regler 33 erweitert. Ausserdem wird das Sollsignal des Betätigungsorgans 2 hier nicht direkt, sondern über das Überlagerungsglied 34 den Anpassungsgliedern 11a und 11b zugeführt. Bei diesem Beispiel wird an die oben angegebene Gleichung (4) angeknüpft und in den Rechengliedern 30a und 30b ein den Ausdrücken

$$g\ \frac{B_V}{G_V + G_H}\quad \text{bzw.}\quad g\ \frac{B_H}{G_V + G_H}$$

entsprechendes Signal erzeugt. Die Ausgangssignale der Anpassungsglieder 11a und 11b entsprechen den Achslasten $G_V$ bzw. $G_H$. Die den beiden o. a. Ausdrücken entsprechenden Signale werden im Glied 31 addiert. Das entstehende Signal entspricht der Fahrzeugverzögerung a. Es wird mit dem Sollsignal des Betätigungsorgans in der Subtrahierstufe 32 in Beziehung gesetzt. Bleibt eine Differenz in die eine oder andere Richtung, so wird über den Regler 33 und das Additionsglied 34 das den Anpassungsgliedern 11a und 11b über das Additionsglied 34 zugeführte Sollsignal des Betätigungsorgans 2 entsprechend vergrössert oder verkleinert und somit eine Anpassung des Bremsdrucks herbeigeführt.

Es wäre auch die Verwendung eines Fahrzeugverzögerungsgebers denkbar, dessen Ausgangssignal die Druckhöhe bestimmt.

## Patentansprüche

1. Bremskraftregelanlage für Kraftfahrzeuge enthaltend

1.) ein Bremsbetätigungsorgan, das ein der Betätigung dieses Organs abhängiges Sollsignal erzeugt,

2.) einen Lastsensor, der ein der Belastung einer Achse abhängiges Signal erzeugt,

3.) einen Bremsregler, dem diese Signale zugeführt werden, und

4.) von diesem Bremsregler derart gesteuerte Bremsdrucksteuereinrichtungen, dass an den Bremsen der Räder unterschiedlicher Achsen von der Achslast abhängige Bremsdrücke eingesteuert werden, dadurch gekennzeichnet, dass der Bremsregler derart ausgelegt und bemessen ist, dass er

a) aus dem Achslastsignal durch Dämpfung (7, 8) ein der statischen Achslast ($G_H$) entsprechendes Signal gewinnt, das bei Bremsbeginn eingespeichert (9) wird,

b) durch Differenzbildung (10) zwischen dem fortlaufend erhaltenen Achslastsignal und dem gespeicherten statischen Achslastsignal fortlaufend ein dem dynamische Anteil (D) der Achslast aufgrund des Bremsens entsprechendes Signal ermittelt,

c) mittels des ermittelten statischen Achslastsignals der einen Achse die statische Last ($G_V$) der anderen Achse ermittelt (11a),

d) aufgrund des Sollsignals und der den statischen Achslasten entsprechenden Signale wird ein erstes Bremsdrucksteuersignal für jede Achse erzeugt (in 11a und 11b),

e) aus dem dem dynamischen Anteil (D) entsprechenden Signal ein zweites Bremsdrucksteuersignal ermittelt (in 12a und 12b) und vorzeichenrichtig den ersten Bremsdrucksteuersignalen für beide Achsen überlagert (in 13a und 13b), und

f) mit den aus der Überlagerung gewonnenen Bremsdrucksteuersignalen die Bremsdrucksteuereinrichtungen (4a und 4b) ansteuert.

2. Bremskraftregelanlage nach Anspruch 1, dadurch gekennzeichnet, dass eine zusätzliche Dämpfung (7) zur Beseitigung von Achslastschwankungen durch Achsbewegungen vorgesehen ist.

3. Bremskraftregelanlage nach Anspruch 1 oder 2, dadurch gekennzeichnet, dass durch die überlagerten Bremsdrucksteuersignale mittels je eines Reglers (21a und 21b) die Bremsdrucksteuereinrichtungen (4a und 4b) derart gesteuert werden, dass ein diesen Signalen entsprechender Bremsdruck an den Bremsen (5a und 5b) eingesteuert wird (Fig. 2).

4. Bremskraftregelanlage nach einem der Ansprüche 1 bis 3, dadurch gekennzeichnet, dass durch die überlagerten Bremsdrucksteuersignale mittels eines weiteren Reglers die Bremsdrucksteuereinrichtungen derart gesteuert werden, dass eine dem Sollsignal entsprechende Fahrzeugverzögerung erreicht wird.

5. Bremskraftregelanlage nach einem der Ansprüche 3 oder 4, dadurch gekennzeichnet, dass aus den ersten Bremsdrucksteuersignalen und dem Bremsdruck an den Bremsen entsprechenden Signalen den Ausdrücken

$$\frac{B_V}{G_V + G_H} \quad \text{und} \quad \frac{B_H}{G_V + G_H}$$

entsprechende Signale gebildet (in 30a und 30b) und summiert (in 31) werden ($B_V$ und $B_H$ sind die Bremskräfte und $G_V$ und $G_H$ die Gewichtsanteile an der Vorder- bzw. Hinterachse) dass dieses Summensignal mit dem Sollsignal verglichen wird (in 32) und dass bei einer Abweichung das zur Erzeugung der ersten Bremsdrucksteuersignal (in 11a und b) verwendete Sollsignal (aus 2) entsprechend in seiner Grösse variiert wird (in 34).

## Claims

1. Brake-pressure regulating system for motor vehicles containing

1) a brake-actuating member which generates a nominal signal dependent on the actuation of this member,

2) a load sensor which generates a signal dependent on the load exerted on an axle,

3) a brake regulator, to which these signals are fed, and

4) brake-pressure control devices controlled by this brake regulator in such a way that brake pressures dependent on the axle load are selected for the brakes of the wheels of different axles, characterized in that the brake regulator is designed and rated in such a way that

a) from the axle-load signal it obtains, by means of attenuation (7, 8), a signal which corresponds to the static axle load ($G_H$) and which is stored (9) at the start of braking,

b) by a subtraction (10) between the axle-load signal obtained continuously and the stored static axle-load signal, a signal corresponding to the dynamic portion (D) of the axle load as a result of braking is determined continuously,

c) by means of the static axle-load signal determined for one axle, the static load ($G_V$) of the other axle is determined (11a),

d) on the basis of the nominal signal and the signals corresponding to the static axle loads, a first brakepressure control signal is generated for each axle (in 11a and 11b),

e) from the signal corresponding to the dynamic portion (D), a second brake-pressure control signal is determined (in 12a and 12b) and superposed, with the correct sign, on the first brakepressure control signals for the two axles (in 13a and 13b), and

f) the brake-pressure control devices (4a and 4b) are activated by means of the brake-pressure control signals obtained as a result of superposition.

2. Brake-pressure regulating system according to Claim 1, characterized in that there is additional attenuation for eliminating axle-load fluctuations resulting from axle movements.

3. Brake-pressure regulating system according to Claim 1 or 2, characterized in that, as a result of the superposed brake-pressure control signals, the brake-pressure control devices (4a and 4b) are each controlled by means of a particular controller (21a and 21b), in such a way that a brake-pressure corresponding to these signals is selected for the brakes (5a and 5b) (Figure 2).

4. Brake-pressure regulating system according to one of Claims 1 to 3, characterized in that, as a result of the superposed brake-pressure control signals, the brake-pressure control devices are controlled by means of a further controller, in such a way that a vehicle deceleration corresponding to the nominal signal is obtained.

5. Brake-pressure regulating system according to one of Claims 3 or 4, characterized in that signals corresponding to the expressions

$$\frac{B_V}{G_V + G_H} \quad \text{and} \quad \frac{B_H}{G_V + G_H}$$

are formed (in 30a and 30b) from the first brake-pressure control signals and from signals corresponding to the brake-pressure at the brakes and are summed (in 31) ($B_V$ and $B_H$ are the brake forces and $G_V$ and $G_H$ are the weight fractions on the front and rear axles respectively), in that this sum signal is compared with the nominal signal (in 32), and in that, in the event of a deviation, the magnitude of the nominal signal (from 2) used to generate the first brake-pressure control signals (in 11a and b) is varied correspondingly (in 34).

## Revendications

1. Installation de réglage de la force de freinage pour véhicules motorisés comportant:

1) un organe de manœuvre du frein qui produit un signal prescrit fonction de la manœuvre de cet organe.

2) un détecteur de réaction qui produit un signal fonction de la réaction d'un essieu.

3) un régulateur de freinage auquel on envoie ces signaux et

4) des dispositifs de commande de la pression de freinage commandés, par ce réglage de freinage, de façon telle que ce sont des pressions de freinage fonction de la réaction exercée sur l'essieu qui sont commandées sur les freins des roues des différents essieux, caractérisée en ce que le régulateur de freinage est conçu et dimensionné de façon que

a) à partir du signal de la réaction exercée sur l'essieu, il obtient, par amortissement, (7, 8) un signal, correspondant à la réaction statique $(G_H)$ exercée sur l'essieu que l'on mémorise (9) dès le début du freinage.

b) en formant la différence (10) entre le signal de la réaction exercée sur l'essieu, obtenu en continu, et le signal statique, mémorisé, de la réaction exercée sur l'essieu, il détermine en continu un signal correspondant à la composante dynamique (D) de la réaction exercée sur l'essieu par suite du freinage.

c) au moyen du signal de la réaction statique exercée sur l'un des essieux, qui a été déterminée, il détermine la réaction statique $(G_V)$ exercée sur l'autre essieu.

d) sur la base du signal prescrit et des signaux correspondants aux réactions statiques exercées sur les essieux, il produit un premier signal de commande de la pression de freinage pour chaque essieu (dans 11a et 11b).

e) à partir du signal correspondant à la composante dynamique (D), il détermine un second signal de commande de la pression de freinage (dans 12a et 12b) et le superpose, avec un signe correct, aux premiers signaux de commande de la pression de freinage pour les deux essieux (dans 13a et 13b), et

f) avec les signaux de commande de la pression de freinage résultants de la superposition, il commande les dispositifs de commande de la pression de freinage (4a et 4b).

2. Installation de réglage de la force de freinage selon la revendication 1, caractérisé en ce qu'il est prévu un amortissement supplémentaire (7) pour éliminer les oscillations de la réaction exercée sur l'essieu provoquées par les mouvements de l'essieu.

3. Installation de réglage de la force de freinage selon la revendication 1 ou 2, caractérisée en ce que les dispositifs de commande de la pression de freinage (4a et 4b) sont commandés par les signaux de commande de la pression de freinage, superposés, au moyen de, chacun, un régulateur (21a et 21b) de façon telle qu'une pression de freinage correspondant à ces signaux est envoyée dans les freins (5a et 5b) (figure 2).

4. Installation de réglage de la force de freinage selon une des revendications 1 à 3, caractérisée en ce que les dispositifs de commande de la pression de freinage sont commandés par les signaux de commande de la pression de freinage, superposés, au moyen d'un autre régulateur, de façon telle que l'on obtient une décélération du véhicule correspondant au signal prescrit.

5. Installation de réglage de la force de freinage selon une des revendications 3 ou 4, caractérisée en ce qu'à partir des premiers signaux de commande de la pression de freinage et des signaux correspondant à la pression de freinage effective sur les freins, on forme les expressions:

$$\frac{\overline{B_V}}{\overline{G_V + G_H}} \quad ou \quad \frac{\overline{B_H}}{\overline{G_V + G_H}}$$

(dans 30a et 30b) et on les additionne (dans 31) ($B_V$ et $B_H$ sont les forces de freinage et $G_V$ et $G_H$ sont les composantes du poids sur l'essieu avant et sur l'essieu arrière); en ce que l'on compare ce signal d'addition avec le signal prescrit (dans 32); et en ce qu'en cas d'écart, on fait varier (dans 34) de façon appropriée la valeur du signal prescrit (par 2) utilisé pour produire le premier signal de commande de la pression de freinage (dans 11a et 11b).

FIG. 1

FIG. 2

FIG. 3

FIG. 4